# EUROPEAN PATENT APPLICATION

(11) **EP 2 213 875 A1**
(43) Date of publication of application: **04.08.2010**
(21) Application number: 09001338.4
(22) Date of filing: 30.01.2009
(51) Int. Cl.: F03D 11/00

(54) **Method and arrangement to forecast an output-power of at least one wind-turbine**

(71) Applicant: Siemens Aktiengesellschaft, 80333 München (DE)
(72) Inventor: Antoniou, Ionannis, 2800 Lyngby (DK); Pedersen, Soeren Markkilde, 3660 Stenløse (DK); Stiesdal, Henrik, 5000 Odense C (DK)

(57) **Abstract**

The invention relates to a method and an arrangement to forecast an output-power of at least one wind-turbine.
According to the invention an optical-signal with a known frequency is sent from an optical transmit-unit (OTU) to a joint measurement volume (CMV). The optical-signal is scattered and reflected by atmospheric particles of the joint measurement volume. As the atmospheric particles are moving with the wind the optical signal is shifted in its frequency due to the Doppler-principle.
The scattered and frequency-shifted optical signal is received by an optical receive-unit (ORU). The frequency-shifted optical signal is compared with the sent optical signal to determine the wind-speed, based on the shifted frequency.
According to the invention the determined wind-speed is used to predict the output-power of the at least one wind-turbine (WT11) or of a whole wind-farm (WF) in a preferred embodiment.

## Description

The invention relates to a method and an arrangement to forecast an output-power of at least one wind-turbine.

To forecast an energy-production of a commercially operated wind-farm an estimation of usable wind-resources at different points of time is used. The different points of time scale a forecast-time-period, which can be divided into a short-term-forecast and into a long-term-forecast.

Based on these forecasts it is possible, to estimate a long-term-forecast and a short-term-forecast of an output-power of the wind-farm, too.

Short-term-forecasts are needed for a system-management, which controls the output-power of the wind-farm, and for the trading of energy. They could be used to decide about the usage of a conventional power-farm and to optimize its scheduling.

Long-term-forecasts are used to plan the maintenance of a wind-farm or a conventional power-plant or its transmission lines.

Long-term-forecasts could also be used to calculate a wind-power market-participation and could be used to optimize a combined operation of wind-power-farms and of conventional power-plants.

Long-term-forecasts are also used to quantify needs for power-reserve to compensate occurring lacks in the wind-power-production.

To obtain a dedicated power quality and to avoid the breakdown of power-supplies, a used electricity grid has to be in balance at any moment. The electricity consumption and the electricity generation have to be in equilibrium.

A range of methods is known to do short-term-forecasts of a wind-farm-output. A "short-term" forecast of a power-production of a wind-farm refers especially to a time-period, which is in between 0 minutes up to the next 30 minutes in this context.

The most widely used method is probably to do a forecast based on an "as it is" output-power of a wind-farm with an estimated trend for an output-power. This approach is simply the assumption, that the most likely output-power in a near future will be equal to an output-power at a present time, but combined with an extrapolation of the output-power-development for the near future.

Another forecast-method uses meteorological data, to predict the output-power in the near future - also based on the "as it is" output-power which is produced right now.

Especially the work of the ANEMOS Consortium, EU R&D Project (ENK5-CT-2002-00665) is used to do forecasting.

Short-term forecasting combines a number of different techniques, which comprises statistical modelling, numerical weather prediction, etc.

There are a great number of models based on different principles, depending on the scale and the physics of the model. The predict-ability of these models depends on the specific terrain conditions, varying between offshore, flat and complex terrain.

These models are influenced widely by fluctuations of the wind.

It is therefore the aim of the invention, to provide an improved method and an arrangement for the forecast of wind-resources, which is suitable to be used to forecast an energy-output of a commercially operated wind-farm.

This problem is solved by the features of claim 1 and of claim 9.

Preferred embodiments of the invention are subject of the subsequent claims.

According to the invention an optical-signal with a known frequency is sent from an optical transmit-unit to a joint measurement volume. The optical-signal is scattered and reflected by atmospheric particles of the joint measurement volume. As the atmospheric particles are moving with the wind the optical signal is shifted in its frequency due to the Doppler-principle.

The scattered and frequency-shifted optical signal is received by an optical receive-unit. The frequency-shifted optical signal is compared with the sent optical signal to determine the wind-speed, based on the shifted frequency.

According to the invention the determined wind-speed is used to predict the output-power of a wind-turbine or of a wind-farm.

In an improved embodiment the optical transmit-unit and the optical receive-unit are located at a dedicated wind-turbine or at a number of dedicated wind-turbines, which belong to a wind-farm.

In a preferred embodiment the optical transmit-unit and the optical receive-unit is part of a so called "Light Detection and Ranging, LIDAR"-system. This system may use a laser-signal as optical signal to determine the wind-speed in a line-of-sight.

The wind-speed in the line-of-sight results from an integration over a given distance defined within the line-of-sight and over a given volume around an area, where the optical receive-unit and the optical transmit-unit is focused.

The optical units are able to map spatial contents of a wind field in a surrounding area of a wind-farm, especially at distances from 0 km up to 15 km. This distance may increase according to expected further developments of LIDAR.

In a preferred embodiment the optical transmit-unit and the optical receive-unit are mounted on the nacelle of the wind-turbine or at the hub of the wind turbine.

It is also possible to mount them on a separate mast, which may be used for weather-predictions.

The optical transmit-unit is "shooting" horizontally, emitting light of a known frequency as optical signal.

In a preferred embodiment a LIDAR-system, which comprises transmit- and receive-units, scans the wind field in a complete 360° sector.

For a large wind-farm, covering a large area, a number of LIDARS are installed to improve the range of measurement and to enlarge therefore the forecast-time.

The LIDAR scans and maps the wind-field, which is ahead of the wind-farm, at preferably at hub-height.

Forecasts on the available production for a coming time interval is based on procedure described above. The results are supplied to a net-operator, who combines them with other available short- and/or medium forecasts.

A "Transmission System Operator, TSO", who is responsible for managing the electricity balance on a connected grid, has therefore more time to decide on a future strategy and to regulate a conventional power-plant accordingly. The wind-farm production may be reduced in that way, that the wind-farm acts as a reserve capacity.

In a preferred embodiment the wind-speed of an incoming wind is measured at several distances related to the site of the wind-park. This allows the operator, to estimate with a significantly improved accuracy the potential output-power-production of the whole wind-park.

Because of the accurate and continuous forecast for the potential output-power production of a specific wind-farm in the next 30 minute time-interval increases the value of the subsequent electricity production and helps to regulate a demanded reserve capacity.

Combining this information with other available forecasting techniques of longer time-ranges helps to optimize the operation of the wind-farm and helps to minimize the use of a reserved capacity. It helps that warranty a more undisturbed power generation, which is less fluctuating and which is all-in-all increasing the value of the produced energy.

The Lidar-based short-term prediction fills up the gap to the more long-term forecasting techniques, which are normally used today. At the same time it offers an additional value to these techniques, making the overall prediction more reliable.

According to the invention the short-term-forecast of an energy output of a wind farm is improved, so the inventive method delivers a significantly improved forecast-quality.

The invention is described in more detail with help of a drawing.

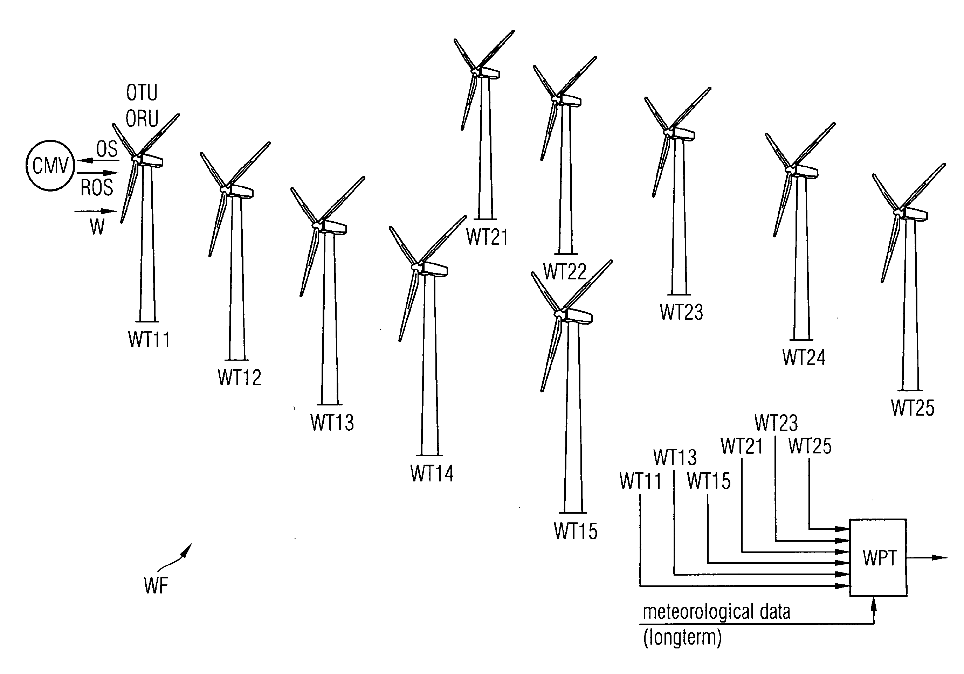

FIG 1 shows a wind-farm WF with lined-up wind-turbines WT11 to WT15 and WT21 to WT25 to be used for the invention.

A wind-speed measurement is done by at least one of the wind-turbines of the wind-farm WF. In this example a wind-speed measurement is done by six wind-turbines WT11, WT13, WT15, WT21, WT23 and WT25.

The wind-speed measurements are delivered to a prediction-tool WPT, where they are used for an output-power-forecast of the wind-farm WF.

In a preferred embodiment long-term meteorological data are used additionally at the prediction tool WPT for the forecast.

According to the invention an optical-signal OS with a known frequency is sent from an optical transmit-unit OTU to a joint measurement volume CMV.

The optical-signal OS is scattered and reflected by atmospheric particles of the joint measurement volume CMV. As the atmospheric particles are moving with the wind W the optical signal OS is shifted in its frequency due to the Doppler-principle. So a reflected optical signal ROS is formed.

The scattered and frequency-shifted optical signal ROS is received by an optical receive-unit ORU. The frequency-shifted optical signal ROS is compared with the sent optical signal OS to determine the wind-speed, based on the shifted frequency.

According to the invention the determined wind-speed is used to predict the output-power of the at least one wind-turbine - in this case the wind-turbine WT11 - or of the whole wind-farm WF in a preferred embodiment.

## Claims

1. Arrangement to forecast an output-power of at least one wind-turbine,
- with an optical transmit-unit, which sends an optical-signal with a known frequency to a joint measurement volume, while the optical-signal is scattered and reflected by atmospheric particles of the joint measurement volume as the atmospheric particles are moving with the wind, and while the optical signal is shifted in its frequency due to the Doppler-principle,
- with an optical receive-unit, which receives the scattered and frequency-shifted optical signal,
- with a determination-unit, which is connected with the receive-unit and with the transmit-unit,
- where the determination-unit is built to compare the transmitted optical signal with the received frequency-shifted optical signal to determine the wind-speed based on the frequency-shift,
- where the determination-unit is built to forecast the output-power of the at least one wind-turbine based on the wind-speed.

2. Arrangement according to claim 1, where the optical transmit-unit and the optical receive-unit are located at a dedicated wind-turbine or at a number of dedicated wind-turbines, which belong to a wind-farm.

3. Arrangement according to claim 1 or 2, where the optical transmit-unit and the optical receive-unit are part of a Light Detection and Ranging-system, which uses a laser-signal as optical signal.

4. Arrangement according to claim 1, where the determination-unit is built to measure the wind-speed in a line-of-sight, while the wind-speed results from an integration over a given distance defined within the line-of-sight and over a given volume around an area, where the optical receive-unit and the optical transmit-unit is focused.

5. Arrangement according to one of the claims 1 to 4, where the determination-unit is built to map spatial contents of a wind field in a surrounding area of a wind-farm, especially at distances up to 15 km.

6. Arrangement according to one of the claims 1 to 5, where the optical transmit-unit and the optical receive-unit are mounted on the nacelle of the wind-turbine or at the hub of the wind turbine or at a separated mast.

7. Arrangement according to one of the claims 1 to 6, where optical transmit-units and optical receive-units of a LIDAR-system are built to scan a 360° sector.

8. Arrangement according to one of the claims 1 to 7, where a number of LIDAR-systems with optical transmit-units and optical receive-units are installed at a wind-farm to improve the range of measurement and/or to enlarge a forecast-time.

9. Method to forecast an output-power of at least one wind-turbine,
- where an optical-signal with a known frequency is sent to a joint measurement volume,
- where the optical-signal is scattered and reflected by atmospheric particles of the joint measurement volume as the atmospheric particles are moving with the wind,
- where the reflected optical signal is shifted in its frequency too, due to the Doppler-principle and due to the reflecting and moving atmospheric particles,
- where the scattered and frequency-shifted optical signal is received and is compared with the transmitted optical signal,
- where the wind-speed is determined based on the frequency-shift of the received optical signal, and
- where the wind-speed is used to forecast the output-power of the at least one wind-turbine.

10. Arrangement according to claim 9, where the wind-speed measurement is done by a dedicated wind-turbine or by a number of dedicated wind-turbines, which belong to a wind-farm.

11. Arrangement according to claim 9 or 10, where the wind-speed measurement is done by a Light Detection and Ranging-system, which uses a laser-signal as optical signal.

12. Arrangement according to claim 9, where the wind-speed is measured in a line-of-sight and where the wind-speed results from an integration over a given distance defined within the line-of-sight and over a given volume around an area, where used optical receive-units and optical transmit-units are scanning.

13. Arrangement according to one of the claims 9 to 12, where the wind-speed is measured in a surrounding area of a wind-farm, especially at distances up to 15 km.

14. Arrangement according to one of the claims 9 to 13, where the wind-speed measurement is done at a level, defined by the height of the wind-turbine or by the height of the hub of the wind turbine.
